# EUROPÄISCHE PATENTSCHRIFT

(11) **EP 2 813 328 B1**
(45) Veröffentlichungstag und Bekanntmachung des Hinweises auf die Patenterteilung: **11.04.2018**
(21) Anmeldenummer: 14168312.8
(22) Anmeldetag: 14.05.2014
(51) Int. Cl.: B25J 9/00

(54) **Vorrichtung zum Umgang mit Artikeln und Verfahren zum Betrieb einer derartigen Vorrichtung**
Device for handling items and a method for operating such a device
Dispositif de manutention d'articles et procédé de fonctionnement d'un tel dispositif

(30) Priorität: 10.06.2013 DE 102013106004
(43) Veröffentlichungstag der Anmeldung: 17.12.2014
(73) Patentinhaber: Krones Aktiengesellschaft, 93073 Neutraubling (DE)
(72) Erfinder: Luber, Hans, 93073 Neutraubling (DE); Perl, Kurt, 93073 Neutraubling (DE); Hartl, Michael, 93073 Neutraubling (DE); Elsperger, Stefan, 93073 Neutraubling (DE)
(74) Vertreter: Benninger, Johannes

(56) Entgegenhaltungen:
- FR-A1- 2 880 575
- US-A1- 2012 118 097
- US-A1- 2013 142 608

## Beschreibung

Die vorliegende Erfindung betrifft eine Vorrichtung zum Umgang mit Artikeln. Der Umgang mit Artikeln kann eine Manipulation eines oder mehrerer Artikel und/oder ein unter dem Begriff Verbringung zusammengefasstes Verschieben und/oder Anheben und/oder Drehen um eine oder mehrere Achsen und/oder Versetzen von Artikeln auf einer Fläche oder auch von einer ersten Fläche auf eine zweite Fläche und/oder die Behandlung eines oder mehrerer Artikel, beispielsweise das Versehen eines oder mehrerer Artikel mittels einer Umreifung, einer Umverpackung, wie etwa einer Umwickelung, einem Schrumpfschlauch oder eines Kartons vorsehen oder umfassen, um nur einige denkbare Ausgestaltungen anzuführen.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Auch kann der Umgang mit Artikeln einen gleichzeitigen Umgang mit mehreren, beispielsweise relativ zueinander gruppierten Artikeln und/oder das Gruppieren von Artikeln, bei dem mehrere Artikel in einer gewünschten Ausrichtung relativ zueinander angeordnet werden, vorsehen.

Zum Umgang mit einem oder mehreren Artikeln ist bekannt, mindestens einen Manipulator zu verwenden, beispielsweise ein Werkzeug, wie etwa ein Greifer oder eine Anlagefläche, welcher Manipulator mit Hilfe einer Vorrichtung zum Umgang mit Artikeln innerhalb eines Arbeitsraums positioniert und beispielsweise entsprechend einer erforderlichen Bewegung zur Ausführung einer Manipulation und/oder einer Verbringung und/oder einer Behandlung eines oder mehrerer Artikel bewegt werden kann. Die Bewegung, die dabei vermittels einer Vorrichtung zum Umgang mit Artikeln ausgeführt wird, kann wie im Fall einer Drehung um eine oder mehrere Achsen eine punktförmige, oder im Fall einer Translationsbewegung eine geradlinige oder zwei- oder dreidimensional gekrümmt verlaufende Bewegungsbahn vorsehen. Auch beispielsweise abschnittsweise Kombinationen hieraus sind möglich.

Der Manipulator kann Teil einer genannten Vorrichtung zum Umgang mit Artikeln sein, diese umfassen oder von dieser umfasst sein. Der Manipulator kann am Ort, an den er mit Hilfe der Vorrichtung zum Umgang mit Artikeln verbracht werden kann, selbst eine oder mehrere Aktionen ausführen, wie beispielsweise eine ein- oder mehrachsige Dreh- und/oder eine ein- oder mehrdimensionale Translationsbewegung und/oder eine Greifbewegung und/oder eine Rotation, um nur einige denkbare Ausgestaltungen zu nennen. Der Arbeitsraum ist dabei durch die Vorrichtung zum Umgang mit Artikeln vorgegeben. Er entspricht einem von einer Hüllfläche eingeschlossenen Volumen, auf der alle Punkte liegen, welche eine beispielsweise einen Manipulator umfassende Vorrichtung zum Umgang mit Artikeln unter Einnahme deren Extremlagen entsprechend bei größtmöglicher Auslenkung in allen Raumwinkelbereichen maximal zu erreichen in der Lage ist.

Bekannte Vorrichtungen zum Umgang mit Artikeln sind so genannte Deltaroboter. Ein Deltaroboter umfasst eine an einem Gestell oberhalb der Fläche, auf der, oder oberhalb der Flächen, zwischen denen ein Umgang mit Artikeln erfolgt, angeordnete Basis. An der Basis ist ein Gestänge bestehend aus mindestens drei Armen und einem mit jedem der mindestens drei Arme gelenkig verbundenen, zentralen Koppelelement angeordnet. Im Zentrum des Gestänges befindet sich das Koppelelement. Das Koppelelement befindet sich dabei zwischen der Basis und der Fläche auf der, oder zwischen der Basis und den Flächen zwischen denen ein Umgang mit Artikeln erfolgt.

Deltaroboter mit drei Armen werden auch als Tripoden bezeichnet.

Jeder der Arme besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können beispielsweise über Kugelgelenke mit den jeweils zugehörigen Oberarmen und dem Koppelelement verbunden sein. Ein solcher einzelner Unterarm ist frei schwenkbar und besitzt keine Eigenstabilität.

Alle Oberarme eines beispielsweise als Tripode ausgeführten Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechnete Schwenkbewegungen um deren gestellfeste Schwenkachsen ausführen.

Wenigstens einer der Unterarme kann aus zwei auch Elle und Speiche genannten, ein auch als Parallelgestänge bezeichnetes Parallelogrammgestänge bildenden Gestängeelementen bestehen, um das Koppelelement in zumindest einer vorgegebenen Ausrichtung relativ zur Basis zu führen.

Das Koppelelement dient dabei als Arbeitsplattform, dem so genannten Tool Central Point (TCP). An diesem kann ein zuvor beschriebener Manipulator angeordnet sein, oder es kann einen zuvor beschriebenen Manipulator umfassen, oder es kann von einem zuvor beschriebenen Manipulator umfasst werden. Im Folgenden wird der Einfachheit halber nicht mehr zwischen diesen verschiedenen Ausgestaltungsvarianten unterschieden und statt dessen einheitlich der Ausdruck eines am Koppelelement angeordneten oder vorgesehenen Manipulators stellvertretend für alle drei Ausgestaltungsvarianten genannt, es sei denn, es ist explizit etwas anderes erwähnt.

Um einen an einem Koppelelement angeordneten Manipulator an dem Ort, an den er vermittels des Koppelelements innerhalb des Arbeitsraums verbracht wurde, zu betätigen und/oder um eine beispielsweise vertikal auf dem Koppelelement und/oder auf der Basis und/oder vertikal auf der gemeinsamen Ebene, innerhalb welcher die gestellfesten Schwenkachsen verlaufen, aufstehende Drehachse zu verdrehen, beispielsweise um einen erwünschten Umgang mit Artikeln auszuführen und/oder um den Manipulator auszurichten, ist bekannt, zwischen der Basis und dem Koppelelement mindestens eine drehbar angetrieben gelagerte Welle vorzusehen. Soll beispielsweise der Manipulator gegenüber dem Koppelelement verdreht werden, so kann eine antreibbar drehbare Lagerung des Manipulators am Koppelelement vorgesehen sein, welche beispielsweise über ein Getriebe oder direkt unverdrehbar mit der zwischen der Basis und dem Koppelelement drehbar angetrieben gelagerten Welle verbunden ist.

Genügt beispielsweise eine unverdrehbare Anordnung des Manipulators am Koppelelement und/oder soll dieser durch wenigstens eine Drehbewegung wenigstens einer zwischen der Basis und dem Koppelelement drehbar angetrieben gelagerten Welle betätigt werden, um eine Aktion auszuführen, so ist zumindest eine zwischen der Basis und dem Koppelelement drehbar angetrieben gelagerte Welle mit einer entsprechenden Eingangswelle des Manipulators oder eines Getriebes des Manipulators verbunden, beispielsweise im Falle eines als ein Greifer ausgeführten Manipulators mit einem Drehbewegungen der Eingangswelle in Linearbewegungen beispielsweise von Klemm- oder Greifbacken des Greifers umwandelnden Zugmittelgetriebe.

Die zwischen der Basis und dem Koppelelement drehbar angetrieben gelagerte Welle ist dabei als mittels Kreuz- oder Kardangelenken mit ihrem Antrieb an der Basis und mit einer drehbaren Lagerung am Koppelelement, beispielsweise der drehbaren Lagerung des Manipulators am Koppelelement oder der drehbaren Lagerung der entsprechenden Eingangswelle des Manipulators oder eines Getriebes des Manipulators verbundene Kardanwelle ausgeführt. Darüber hinaus ist die Welle als Teleskopstange ausgeführt, um verschiedene Abstände des Koppelelements zur Basis während dessen Bewegungen im Arbeitsraum ausgleichen zu können. Die Teleskopstange kann ineinander schiebbar oder beispielsweise an der Basis in Richtung deren momentaner axialer Erstreckung gleitend gelagert sein. Eine solche, als Kardanwelle und Teleskopstange ausgeführte Welle wird im Nachfolgenden als Teleskopwelle bezeichnet. Das Koppelelement kann hierbei als ein einfacher Lagerring zur Aufnahme einer drehbaren Lagerung der Teleskopwelle oder des Manipulators ausgeführt sein, der an seinem Außenumfang Anschlüsse zur Befestigung der Unterarme aufweist. Zwischen dem Lagerring und einem entsprechenden Gegenstück an der Teleskopwelle oder am Manipulator können beispielsweise Wälzelemente zur Verringerung von Reibungsverlusten und Verschleiß vorgesehen sein.

Durch DE 10 2010 006 155 A1 ist eine als ein Tripode ausgeführte Vorrichtung zum Umgang mit Artikeln bekannt. Diese besteht aus einer Basis, die an einem Gestell oberhalb einer Fläche, auf der ein Umgang mit Artikeln erfolgt, angeordnet ist. An der Basis ist ein Gestänge bestehend aus drei Armen und einem mit jedem der drei Arme gelenkig verbundenen, zentralen Koppelelement angeordnet. Jeder der Arme besteht aus einem an der Basis um eine gestellfeste Schwenkachse angetrieben verschwenkbar angeordneten Oberarm und einem mit dem Oberarm und dem Koppelelement gelenkig verbundenen Unterarm. Alle Oberarme sind jeweils um innerhalb einer gemeinsamen Ebene liegende Schwenkachsen verschwenkbar angetrieben gelagert. Die Schwenkachsen schneiden einander innerhalb deren gemeinsamer Ebene. Damit weisen alle Schwenkachsen zwei Schnittpunkte mit den jeweils verbleibenden Schwenkachsen auf. Die Unterarme aller Arme bestehen jeweils aus zwei ein Parallelogrammgestänge bildenden Gestängeelementen. Dadurch wird das Koppelelement immer parallel zur Fläche, auf der ein Umgang mit Artikeln erfolgt, und parallel zur Basis geführt. Der Tripode umfasst darüber hinaus eine Teleskopwelle, mit der eine am Koppelelement drehbar gelagerte Welle gedreht werden kann. Zum Ausgleich verschiedener Abstände zwischen Koppelelement und Basis ist die Teleskopwelle an der Basis in Richtung ihrer momentanen axialen Erstreckung gleitend gelagert. Am Koppelelement kann ein Manipulator angeordnet sein, der vermittels einer Drehung der am Koppelelement drehbar gelagerten Welle betätigt, beispielsweise gedreht werden kann. Zu Zwecken weiterer Betätigungen des Manipulators können zusätzliche Teleskopwellen vorgesehen sein, welche Drehmomente von an der Basis angeordneten Antrieben zum Manipulator übertragen. Die Teleskopwellen verlaufen dabei weder parallel, noch koaxial zueinander.

Ein Tripode mit einer ineinander schiebbaren Teleskopwelle ist durch EP 1 293 691 A1 bekannt.

Ein Tripode mit einer an der Basis in Richtung ihrer momentanen axialen Erstreckung in einer vollkardanischen Aufhängung gleitend gelagerten Teleskopstange nebst einer Drehmomentübertragung von einem gestellfesten Antrieb über die vollkardanische Aufhängung auf die Teleskopwelle ist durch US 8,210,068 B2 bekannt.

Durch US 2011/0154936 A1 ist bekannt, die Unterarme der beiden Arme eines Roboters an vermittels Spindelantrieben verwirklichten Linearantrieben gelenkig anzuordnen, statt wie bei einem zuvor beschriebenen Deltaroboter gelenkig an um gestellfeste Schwenkachsen schwenkbar angetrieben gelagerten Oberarmen vorzusehen. Die Längsachsen, entlang der die Linearantriebe verstellbar sind, verlaufen dabei mit einer normal auf der Basis aufstehenden Basisachse innerhalb einer gemeinsamen Ebene. Die Längsachsen und die Basisachse schneiden einander in einem gemeinsamen Schnittpunkt. Eine angetriebene Teleskopwelle erstreckt sich vom Zentrum der Basis zum Zentrum eines zentralen, gelenkig mit den Unterarmen verbundenen Koppelelements und ist dort drehbar gelagert. Die Unterarme sind als Parallelgestänge ausgeführt, so dass das Koppelelement parallel zur Basis geführt wird.

Durch WO 2004/004986 A2 ist ein ebenfalls mit einer Basis und einem Koppelelement ausgestatteter Roboter bekannt. Zwischen dem Zentrum der untenliegenden Basis und dem Zentrum des Koppelelements ist ein Linearantrieb in Form eines ausziehbar oder ineinander schiebbar angetriebenen Teleskopstabs angeordnet. Der Teleskopstab überträgt eine Schub- bzw. Druckkraft weg von der Basis auf das Koppelelement. Zur Steuerung der Position und Ausrichtung des Koppelelements innerhalb eines Arbeitsraums sind biegeschlaffe Elemente vorgesehen, welche mit dem Koppelelement fest und mit der Basis verstellbar verbunden sind. Die Lage und der Abstand des Koppelelements zur Basis werden dabei durch die Druckkraft des Teleskopstabs und die Zugkräfte der biegeschlaffen Elemente bestimmt. Beispielsweise können die biegeschlaffen Elemente paarweise im Sinne einer Parallelkinematik oder einzeln vermittels unabhängig voneinander steuerbar angetriebener Seilwinden längenverstellbar vorgesehen sein. Alternativ können die biegeschlaffen Elemente in ihrer Länge unveränderlich an schwenkbar angetrieben an der Basis angeordneten Armen befestigt sein. Auch Kombinationen hiervon sind möglich. Um Drehbewegungen am Koppelelement zur Verfügung zu stellen, ist ein separat gesteuerter und auf dem Koppelelement montierter Drehantrieb erforderlich.

Nachteilig an den bekannten Deltarobotern und Tripoden ist deren verhältnismäßig geringe Nutzlast, insbesondere in den Extremlagen. Eine Extremlage zeichnet sich dabei durch eine ausgelenkte Position des Koppelelements aus, bei dem sich das Koppelelement außerhalb eines durch eine vertikale Projektion der Basis und/oder einer durch die Schwenkachsen eingeschlossenen Fläche entlang einer normal auf dieser aufstehenden Basisachse ergebenden Zylinders befindet.

Darüber hinaus sind die Hebel- und Kraftverhältnisse zum Bewegen größerer Massen in den Extremlagen des Roboters sehr ungünstig.

Dies schränkt die zum Umgang mit Artikeln zur Verfügung stehende Nutzlast des Deltaroboters am Koppelelement zusätzlich ein.

Damit einhergehend ist der Nachteil einer eingeschränkten Taktung. Die Taktung kann als Quotient der Anzahl von Artikeln zur Zeit, innerhalb der mit dieser Anzahl von Artikeln umgegangen wird, beschrieben werden.

Die Taktung, mit der innerhalb möglichst kurzer Zeit mit möglichst vielen Artikeln umgegangen werden kann, stellt dabei einen wesentlichen Kostenfaktor in der Verpackungstechnik und in der Verpackungsindustrie dar. Je kürzer die Taktung, desto höher ist dabei der Artikelumsatz und um so höher und damit besser ist die Auslastung der hierfür vorgesehenen Maschinen, Anlagen und Einrichtungen.

Die Taktung ist dabei begrenzt durch die Geschwindigkeit, mit der zum Umgang mit Artikeln erforderliche Bewegungen höchstens ausgeführt werden können. Die Geschwindigkeit ist wiederum beschränkt durch die maximal erzielbaren Beschleunigungen. Diese sind insbesondere in den Extremlagen des Roboters ebenfalls deutlich herabgesetzt.

Bedingt durch die filigrane Konstruktion von Deltarobotern sind diese außerdem besonders anfällig für Beschädigungen aufgrund von Kollisionen, beispielsweise mit Artikeln auf der mindestens einen Fläche auf der mit Artikeln umgegangen wird. Dabei werden durch Kollisionen vor allem die Antriebe der Schwenkachsen nebst gegebenenfalls vorhandenen Getrieben in Mitleidenschaft gezogen.

Durch US 2013/142608 A1 ist eine Vorrichtung zum Umgang mit Artikeln bekannt, welche eine Basis sowie ein Gestänge bestehend aus mindestens drei angetriebenen Armen und einem zentralen Koppelelement umfasst. Jeder der angetriebenen Arme besteht aus einem um eine eigene, an der Basis angeordnete Schwenkachse drehbar angetrieben gelagerten Oberarm und einem an dem Oberarm gelenkig angeordneten und mit dem Koppelement gelenkig verbundenen Unterarm und verfügt über einen eigenen Schwenkantrieb zum individuellen Verschwenken des Oberarms um dessen Schwenkachse. Zwischen der Basis und dem Koppelelement ist ein gesteuert angetriebener Linearaktuator angeordnet, welcher mit einem ersten Ende gelenkig an wenigstens einem Kopfpunkt an der Basis und mit einem zweiten Ende gelenkig an zumindest einem Fußpunkt am Koppelelement angeordnet ist. Zwischen dem ersten Ende und dem zweiten Ende des Linearaktuators erstreckt sich dessen Aktuatorachse. Ein dessen Erstreckung entlang der Aktuatorachse verändernder Stellweg des Linearaktuators ist proportional einem von der Stellung der Arme vorgegebenen, veränderlichen Abstand zwischen Kopfpunkt und Fußpunkt. Basisseitig an dem Linearaktuator ist ein via eines Gelenks mit dem Linearaktuator verbundener Drehantrieb vorgesehen, welcher eine den gesamten Linearaktuator in Rotation um dessen Aktuatorachse versetzende Drehbewegung erzeugt und via des Linearaktuators zum Koppelelement überträgt. Alternativ kann ein Drehantrieb am Koppelelement vorgesehen sein.

Durch US 2012/118097 A1 ist bekannt, zur Energieversorgung eines an einem Koppelelement eines Deltaroboters angeordneten Drehantriebs spiralfederartig geformte, längenverstellbare Versorgungsleitungen innerhalb einer gelenkig zwischen Basis und Koppelelement angeordneten längenverstellbaren Hülse vorzusehen.

Durch FR 2880575 A1 ist bekannt, zur Übertragung von Zug- und Druckkräften auf einen an einem Koppelelement eines Deltaroboters angeordneten, durch Zug- und Druckkräfte betätigbaren Manipulator einen Linearaktuator vorzusehen, der aus einem auf einen im Zentrum des Koppelelements angeordneten Manipulator einwirkenden Scherengitter und einer im Zentrum der Basis angeordneten Auflage besteht. Die Auflage umfasst eine horizontale Gleitschiene und eine vertikale Gleitschiene. Das Scherengitter ist mit einem ersten Lager am obersten Gelenk in der horizontalen Gleitschiene und mit einem zweiten Lager am zweiten Gelenk in der vertikalen Gleitschiene gelagert. Eine vertikale Krafteinwirkung auf das Lager veranlasst das Scherengitter sich zusammenzuziehen, oder sich auszudehnen. Die horizontale Gleitschiene erlaubt die Übertragung der Zug- und Druckkräfte unabhängig von der Auslenkung des Koppelelements. Die übertragenen Zug- und Druckkräfte können einen Manipulator am Koppelelement betätigen.

Eine Aufgabe der Erfindung ist eine verbesserte Vorrichtung zum Umgang mit Artikeln zur Verfügung zu stellen, welche die Nachteile des Standes der Technik behebt und insbesondere eine einfach und kostengünstig herstellbare Energiezufuhr in Verbindung mit einer Übertragung von Drehbewegungen zu einem Koppelelement und einem zwischen Basis und Koppelelement angeordneten Linearaktuator ermöglicht.

Die Aufgabe wird jeweils gelöst durch die Merkmale des Anspruchs 1. Weitere vorteilhafte Ausgestaltungen werden durch die Unteransprüche beschrieben. Der Gegenstand der Erfindung betrifft demnach eine Vorrichtung zum Umgang mit Artikeln. Diese umfasst:
- ein Gestell vorzugsweise mit einer beispielsweise zentralen Partie oberhalb mindestens einer Fläche, auf der mit Artikeln umgegangen wird, beispielsweise oberhalb einer Fläche, auf der mit Artikeln umgegangen wird oder oberhalb von Flächen, auf und/oder zwischen denen mit Artikeln umgegangen wird,
- eine Basis, welche an der beispielsweise zentralen Partie des Gestells oberhalb der Fläche, auf der mit Artikeln umgegangen wird, oder oberhalb der Flächen, zwischen denen mit Artikeln umgegangen wird, angeordnet ist, sowie
- ein Gestänge bestehend aus mindestens drei angetriebenen Armen und einem zentralen Koppelelement.

Die Fläche auf der oder die Flächen zwischen denen ein Umgang mit Artikeln erfolgt, kann bzw. können beispielsweise horizontal oder geneigt ebenen oder gewölbt verlaufend, fest stehend oder bewegt sein, wobei auch beispielsweise abschnittsweise Kombinationen möglich sind und/oder beispielsweise eine Fläche eine Eigenschaft aufweist, wie beispielsweise eine fest stehende Anordnung, und die andere Fläche eine hiervon verschiedene Eigenschaft aufweist, wie beispielsweise eine bewegte Ausführung.

Jeder der angetriebenen Arme besteht aus einem um eine eigene, beispielsweise parallel zu der Fläche, auf der mit Artikeln umgegangen wird, oder parallel zu den Flächen, zwischen denen mit Artikeln umgegangen wird, verlaufende Schwenkachse drehbar angetrieben gelagerten Oberarm und einem an dem Oberarm gelenkig angeordneten und mit dem Koppelement gelenkig verbundenen Unterarm. Jeder der Arme verfügt über einen eigenen, vorzugsweise individuell gesteuerten Schwenkantrieb zum individuellen Verschwenken des jeweiligen Oberarms um dessen Schwenkachse.

Als Schwenkantriebe für die Oberarme kommen via der Schwenkachsen auf die Oberarme einwirkende Schwenkantriebe mit oder ohne Getriebe, beispielsweise getriebelose Direktantriebe, oder andersartige, beispielsweise über Zug- und/oder Druckstangen oder als Linearantriebe ausgeführte, auf die Oberarme einwirkende, beispielsweise elektrische, pneumatische oder hydraulische Antriebe in Frage.

Um das Koppelelement in beliebiger Richtung beispielsweise schräg und/oder senkrecht und/oder parallel zu der mindestens einen Fläche auf der - oder im Falle mehrerer Flächen alternativ oder zusätzlich möglich, zwischen denen - ein Umgang mit Artikeln erfolgt, bewegen zu können, schneidet wenigstens eine gestellfeste Schwenkachse mindestens eine der verbleibenden Schwenkachsen. Zwei oder mehr Schwenkachsen können parallel verlaufen. Vorzugsweise weisen alle Schwenkachsen zwei Schnittpunkte mit anderen Schwenkachsen auf.

Wenigstens einer der Unterarme der Vorrichtung kann als ein Parallelgestänge aus zwei Elle und Speiche bildenden Gestängeelementen ausgebildet sein. Das Parallelgestänge ist vorzugsweise so ausgebildet, dass das Koppelelement parallel zur Schwenkachse des zugehörigen Oberarms des jeweiligen Arms gehalten wird. Dies kann dadurch erhalten werden, indem die das Parallelgestänge bildenden Gestängeelemente des Unterarms in Richtung der Erstreckung der Schwenkachse des zugehörigen Oberarms des jeweiligen Arms zueinander beabstandet sind und die gelenkigen Verbindungen der beiden Gestängeelemente mit dem Oberarm auf einer ersten, parallel zur Schwenkachse des zugehörigen Oberarms des jeweiligen Arms verlaufenden Geraden liegen, sowie die gelenkigen Verbindungen der beiden Gestängeelemente mit dem Koppelelement auf einer zweiten, parallel zur Schwenkachse des zugehörigen Oberarms des jeweiligen Arms verlaufenden Geraden liegen. Eine Ausführung eines Unterarms als ein solches Parallelgestänge hält das Koppelelement parallel zur Schwenkachse des zugehörigen Oberarms des jeweiligen Arms.

Vorzugsweise sind mindestens zwei Unterarme von Armen der Vorrichtung, deren Oberarme nicht parallel zueinander verlaufende, sondern einander vorzugsweise schneidende oder windschief zueinander stehende Schwenkachsen aufweisen, als Parallelgestänge ausgeführt. Dadurch kann das Koppelelement in stets gleicher Ausrichtung relativ beispielsweise zur Basis im Arbeitsraum geführt werden.

Besonders bevorzugt sind alle Unterarme aller Arme als Parallelgestänge ausgeführt. Dadurch wird eine besonders stabile Parallelführung des Koppelelements beispielsweise zur Basis erhalten.

Die Vorrichtung zeichnet sich dadurch aus, dass zwischen der Basis und dem Koppelelement mindestens ein gesteuert angetriebener Linearaktuator gelenkig angeordnet ist. Der Linearaktuator ist dabei mit einem ersten Ende gelenkig an einem Kopfpunkt an der Basis und mit einem zweiten Ende gelenkig an einem Fußpunkt am Koppelelement angeordnet. Zwischen dem ersten Ende und dem zweiten Ende des Linearaktuators erstreckt sich dessen Aktuatorachse.

Der Linearaktuator hat eine gesteuert angetrieben verstellbare Erstreckung zwischen seinem ersten Ende und seinem zweiten Ende entlang der Aktuatorachse. Die gesteuert angetrieben verstellbare und damit veränderliche Erstreckung entspricht einer Grunderstreckung des Linearaktuators, in welcher der Linearaktuator seine kleinste Erstreckung entlang der Aktuatorachse aufweist, zuzüglich eines angetrieben veränderlichen Stellwegs. Der Stellweg kann dimensionslos dargestellt zwischen 0 und 1 betragen. Bei einem Stellweg von 0 ist der Linearaktuator ganz zusammengefahren und die Erstreckung des Linearaktuators entspricht dessen Grunderstreckung. Bei einem Stellweg von 1 ist der Linearaktuator ganz auseinandergefahren. Die Erstreckung des Linearaktuators entspricht hierbei der Grunderstreckung zuzüglich dem Stellweg. Dieser kann kleiner sein, als die Grunderstreckung, jedoch je nach Ausgestaltung des Linearaktuators auch größer, bis zu einem mehrfachen der Grunderstreckung sein.

Der die Erstreckung des Linearaktuators entlang der Aktuatorachse beeinflussende und damit verändernde, gesteuert angetriebene Stellweg des Linearaktuators ist proportional einem von der Stellung der Arme vorgegebenen, veränderlichen Abstand zwischen Kopf- und Fußpunkt.

Ein entlang der Aktuatorachse sich verändernder Stellweg des Linearaktuators gleicht damit den veränderlichen Abstand zwischen Kopfpunkt und Fußpunkt entsprechend der Stellung der Arme aus.

Ein die Erstreckung des Linearaktuators entlang der Aktuatorachse beeinflussender, gesteuerter Stellweg des Linearaktuators folgt damit einem von der Stellung der Arme vorgegebenen, veränderlichen Abstand zwischen Kopf- und Fußpunkt.

Mit anderen Worten ist der Stellweg des Linearaktuators dabei so gesteuert, dass die Erstreckung des Linearaktuators entlang der Aktuatorachse direkt proportional einem von der Stellung der Arme vorgegebenen, veränderlichen Abstand zwischen Kopf- und Fußpunkt entspricht.

Der Linearaktuator dient vorzugsweise lediglich einer Unterstützung der Arme. Dies wird insbesondere in Extremlagen dadurch erreicht, dass der Linearaktuator das Koppelelement nach außen drückt, wodurch die Arme und deren Schwenkantriebe entlastet werden.

Der Linearaktuator arbeitet zumindest auf Druck, wobei er zu einer durch die Stellung der Arme der Vorrichtung vorgegebenen Länge ausfährt und diese auch gegen eine den Linearaktuator zusammen stauchende Belastung hält.

Der Linearaktuator kann hierfür als ein auch als Druckantrieb bezeichneter Hubantrieb ausgeführt sein.

Alternativ oder zusätzlich kann der Linearaktuator als ein Zug- und Druckantrieb ausgeführt sein, wobei er auf Zug und auf Druck arbeitet und beispielsweise vermittels einer Steuerung gesteuert zu einer durch die Stellung der Arme der Vorrichtung vorgegebene Länge ausfährt und diese auch gegen eine den Linearaktuator zusammen stauchende und/oder weiter verlängernde Belastung hält.

Zusammengefasst kann der Linearaktuator als ein Hub- oder als ein Hub- und Zugantrieb ausgeführt sein.

Die Vorrichtung kann darüber hinaus über eine Steuerung verfügen, welche den Linearaktuator dabei so steuert, dass dessen Stellwegveränderung einem durch eine Änderung der Stellung der Arme der Vorrichtung vorgegebenen Abstandsänderung zwischen Kopf- und Fußpunkt entspricht und/oder synchron einer durch eine Änderung der Stellung der Arme der Vorrichtung vorgegebenen Abstandsänderung zwischen Kopf- und Fußpunkt erfolgt.

Als Kopfpunkt kann das Zentrum der Basis dienen. Als Fußpunkt kann das Zentrum des Koppelelements dienen. Die Wahl der Zentren, vor allem die Wahl des Zentrums des Koppelelements als Fußpunkt hat dabei den Vorteil einer mittigen, zentralen Krafteinleitung durch den Linearaktuator auf das Koppelelement.

Bei der Verwendung eines außermittig angeordneten Linearaktuators oder mehrerer, beispielsweise zwischen beispielsweise symmetrisch um das Zentrum der Basis angeordnete Kopfpunkte und beispielsweise symmetrisch um das Zentrum des Koppelelements angeordnete Fußpunkte angeordneten Linearaktuatoren kann zusätzlich eine vom Zentrum der Basis zum Zentrum des Koppelelementes verlaufende, basisseitig angetriebene Teleskopwelle vorgesehen sein, welche Drehbewegungen, beispielsweise zur Betätigung eines am Koppelelement vorgesehenen Manipulators, überträgt.

Grundsätzlich ist alternativ oder zusätzlich denkbar, eine oder mehrere Teleskopwellen außerhalb des Zentrums der Basis und des Zentrums des Koppelelements vorzusehen.

Bei dem Linearaktuator handelt es sich vorzugsweise um eine entsprechend dem Stellweg entlang der Aktuatorachse gesteuert angetrieben verlänger- und wieder verkürzbare Hub- und/oder Verstelleinrichtung, welche eine eingenommene Erstreckung entlang der Aktuatorachse gegen in Richtung der Aktuatorachse wirkende Druck- sowie vorzugsweise auch Zugkräfte so lange hält, bis der Linearaktuator durch dessen Betätigung bzw. eine Betätigung dessen Antriebs gesteuert angetrieben eine neue Erstreckung entlang der Aktuatorachse einnimmt.

Beispielsweise kann es sich bei einem Linearaktuator um einen elektromechanischen Hubzylinder oder um eine auch Teleskopsäule oder Teleskopantrieb genannte, elektromechanische Hubsäule handeln. Diese verfügen über einen unmittelbar auf den Stellweg einwirkenden elektrischen Antrieb.

Als Antrieb für einen Linearaktuator kommt beispielsweise ein Linearantrieb in Frage.

Ein Linearantrieb bezeichnet dabei einen Antrieb, welcher zu einer translatorischen Bewegung in gerader Linie oder entlang eines anderen, vorgegebenen Verlaufs führt. Einfache Ausgestaltungen von Linearantrieben sind beispielsweise Hydraulik- und/oder Pneumatikzylinder.

Beispiele für weitere Linearantriebe sind Kugelgewindetriebe, Rollengewindetriebe, z.B. Rollengewindetriebe mit Rollenrückführung oder Planetenrollengewindetriebe, Zahnstangentriebe, elektromechanische Linearantriebe, wie etwa Linearmotoren mit elektrodynamischen Wirkprinzip, Linearaktoren mit piezoelektrischem, elektrostatischem, elektromagnetischem, magnetorestriktivem oder thermoelektrischem Wirkprinzip.

Der Linearaktuator kann wie bereits erwähnt alternativ oder zusätzlich als ein Pneumatik- und/oder Hydraulikzylinder ausgeführt sein. Bei diesen kann ein gasförmiges oder flüssiges Fluid, beispielsweise Luft oder Hydrauliköl, ebenfalls vermittels einer elektrisch angetriebenen Pumpe unter Druck gesetzt werden. Ein Einfluss auf den Stellweg wird hierbei allerdings nur indirekt über das Fluid hergestellt, das ventilgesteuert in und/oder aus dem als ein Pneumatik- und/oder Hydraulikzylinder ausgeführten Linearaktuator ein- und/oder ausströmt und dadurch dessen Stellweg beeinflusst.

Beispielsweise kann der Linearaktuator als ein ein- oder beidseitig mit Druck beaufschlagbarer, hydraulischer und/oder pneumatischer Zylinder ausgeführt sein.

Der maximale Stellweg des Linearaktuators kann durch eine Reihenschaltung mehrerer Linearantriebe vergrößert werden, wie dies beispielsweise bei Teleskopsäulen verwirklicht wird.

Der Linearaktuator ist mit einem Drehantrieb zu einem Linear-Dreh-Aktuator kombiniert. Dabei ist ein Drehantrieb am Linearaktuator vorgesehen, welcher bei Betätigung das von der Basis weg gerichtete, zweite Ende des Linearaktuators, in eine Drehung um die Aktuatorachse gegenüber dem der Basis zugewandten ersten Ende, versetzt. Der Linear-Dreh-Aktuator kann als ein Hubdrehantrieb oder als ein Hub- und Zugdrehantrieb ausgeführt sein.

Das zweite Ende des Linear-Dreh-Aktuators ist dabei zusätzlich zu dessen gelenkiger Verbindung mit dem Koppelelement um eine vorzugsweise normal auf einer durch das Koppelelement gebildeten Ebene aufstehende Koppelelementachse drehbar am Koppelelement gelagert.

Als Drehantrieb des Linear-Dreh-Aktuators kann ein in den Linearaktuator integrierter Dreh-Torquemotor vorgesehen sein.

Am Koppelelement kann ein Manipulator angeordnet sein oder das Koppelelement kann einen Manipulator umfassen oder von einem Manipulator umfasst werden.

Der Manipulator kann verdrehbar oder unverdrehbar am Koppelelement vorgesehen sein.

Die wenigstens eine vermittels zumindest eines Linear-Dreh-Aktuators erzeugte und zum Koppelelement übertragene Drehbewegung kann dazu vorgesehen sein, einen am Koppelelement vorgesehenen Manipulator zu betätigen, beispielsweise damit dieser eine Aktion ausführen kann.

Bei dem Manipulator kann es sich beispielsweise um einen Greifer handeln, der durch vermittels eines Linear-Dreh-Aktuators erzeugte und zum Koppelelement übertragene, gegensinnige Drehbewegungen geschlossen und geöffnet werden kann, entsprechend einem Zupacken und einem Loslassen eines oder mehrerer Artikel. Zwischen Zupacken und Loslassen kann eine Verbringung erfolgen, bei der die gegriffenen Artikel beispielsweise angehoben und versetzt werden können.

Bei einem beispielsweise als rotierender Finger ausgeführten Manipulator können vermittels eines Linear-Dreh-Aktuators erzeugte und zum Koppelelement übertragene Drehbewegungen dazu dienen, Artikel beispielsweise durch Reibung auf einer Fläche, auf der mit Artikeln umgegangen wird, auszurichten und/oder zu verbringen.

Bei einem beispielsweise zur Manipulation von als Behälter ausgeführten Artikeln durch Entfernen oder Aufbringen beispielsweise eines Schraubverschlusses vorgesehenen und entsprechend ausgeführten Manipulator können vermittels eines Linear-Dreh-Aktuators erzeugte und zum Koppelelement übertragene Drehbewegungen dazu dienen, beispielsweise Behälterdeckel - etwa im Recycling - auf- oder - beispielsweise bei der Abfüllung - zuzuschrauben.

Bei einem beispielsweise zur Behandlung von Artikeln beispielsweise durch Anbringung einer Umreifung um gruppierte Artikel vorgesehenen und entsprechend ausgeführten Manipulator können vermittels eines Linear-Dreh-Aktuators erzeugte und zum Koppelelement übertragene Drehbewegungen dazu dienen, beispielsweise ein Umreifungsband abzulängen und/oder dessen Enden nach dem Umwickeln der Artikel miteinander zu verbinden, beispielsweise durch bördeln. Dabei können für verschiedene erforderliche Aktionen eine entsprechende Anzahl von jeweils Drehbewegungen übertragende Teleskopwellen vorgesehen sein.

Zwischen einem am Koppelelement vorgesehenen Manipulator, der vermittels einer oder mehrerer vermittels eines Linear-Dreh-Aktuators erzeugte und zum Koppelelement übertragene Drehbewegungen betätigt werden kann, und dem Drehantrieb, beispielsweise zwischen dem Manipulator und dem zusätzlich zu dessen gelenkiger Verbindung mit dem Koppelelement drehbar am Koppelelement gelagerten zweite Ende des Linear-Dreh-Aktuators, kann dabei ein beispielsweise platzsparendes, leichtes Getriebe, wie etwa ein Planeten- oder Zykloidgetriebe vorgesehen sein, welches schnelle Drehbewegungen des Linear-Dreh-Aktuators in langsamere, dafür drehmomentstärkere Bewegungen zur Betätigung des Manipulators übersetzt.

Wichtig ist hervorzuheben, dass grundsätzlich mehrere, gegebenenfalls zwischen unterschiedlichen Kopf- und Fußpunkten angeordnete Linearaktuatoren vorgesehen sein können. Dadurch kann beispielsweise wie bei einem Parallelgestänge zusätzlich eine Parallelführung oder andersgeartete konstante Relativausrichtung zwischen Basis und Koppelelement unterstützt werden. Darüber hinaus ist denkbar, auf eine Parallelführung durch die Unterarme zu verzichten und diese beispielsweise über mehrere zwischen unterschiedlichen Kopf- und Fußpunkten angeordnete, individuell gesteuerte Linearaktuatoren herzustellen. Ebenfalls denkbar ist bei einer solchen Ausführung vermittels einer variablen Steuerung mehrerer Linearaktuatoren bei Bedarf die Parallelführung aufzuheben und das Koppelelement im Arbeitsraum zu verschwenken.

Vorteile gegenüber dem Stand der Technik sind neben einer Behebung der Eingangs erwähnten Nachteile des Standes der Technik unter Anderem, dass der Linearaktuator beispielsweise Schwenkantriebe der Arme, zumindest unter Anderem deren gegebenenfalls vorgesehene Getriebe und/oder Motoren, bei Kollisionen schützt.

Zusätzliche Vorteile gegenüber dem Stand der Technik sind, dass der Linearaktuator nur der Unterstützung der Arme dient. Die Steuerung des Stellwegs des Linearaktuators folgt damit lediglich der durch die Stellung der Arme vorgegebenen Position des Koppelelements. Der Linearaktuator selbst trägt damit zunächst nichts zur Positionierung des Koppelelements im Arbeitsraum bei. Dadurch ist keine aufwändige Steuerung vonnöten, um die mit der Erfüllung der zu Grunde liegenden Aufgabe einhergehenden Vorteile zu erzielen. Eine erfindungsgemäße Vorrichtung kann dadurch einfach und kostengünstig hergestellt werden, um die mit der Lösung der gestellten Aufgabe angestrebten Vorteile gegenüber dem Stand der Technik zu erreichen.

Ein zusätzlicher Vorteil ist, dass die beim Stand der Technik auf etwa 6 kg beschränkte Nutzlast durch die Verwendung eines Linearaktuators auf bis zu 50 kg erhöht werden kann, ohne die Vorteile eines Deltaroboters hinsichtlich kleiner bewegter Massen gegenüber beispielsweise Knickarmrobotern, bei denen am Arm angeordnete Antriebe mit bewegt und damit mit beschleunigt werden müssen, aufzugeben, da nach wie vor gestellfeste Antriebe vorgesehen sind.

Vorteile gegenüber dem Stand der Technik sind demnach unter Anderem, dass:
- der beispielsweise als ein Linearantrieb, etwa in Form eines Pneumatikzylinders oder eines Linearmotors ausgeführte Linearaktuator als ein Kraftverstärker besonders in den Extremlagen des Tripoden dient.
- durch den zusätzlichen Linearaktuator die Motoren, als auch die gegebenenfalls vorgesehenen Getriebe der Antriebe nebst den filigranen Gestängeelementen der Arme der Vorrichtung zum Umgang mit Artikeln entlastet werden.
- durch sein direktes Ansprechverhalten frei von einer Getriebeübersetzung der Linearaktuator als Kollisionsschutz mit Dämpfungsfunktion beispielsweise bei ungewollten Kollisionen dient.
- durch den rotatorisch feststehenden, beispielsweise als Linear-Dreh-Aktuator ausgeführten Linearaktuator die Energiezuführung an einen Drehantrieb des Linear-Dreh-Aktuators und falls notwendig zum Koppelelement erleichtert wird.
- durch den Linear-Dreh-Aktuator eine Drehbewegung auf das Koppelelement übertragen bzw. die Drehbewegung des Antriebs zur Betätigung einer zusätzlichen Aktion eines am Koppelelement vorgesehenen Manipulators, wie etwa Klemmen eines Artikels, verwendet werden kann.
- durch Anbau eines Getriebes, z.B. eines Planetengetriebes am Drehantrieb des Linear-Dreh-Aktuators bzw. zwischen dem Drehantrieb des Linear-Dreh-Aktuators und dem Koppelelement relativ große Drehmomente zum Koppelelement übertragen werden können.
- keine Versorgung mit Steuer- und Energieleitungen notwendig ist, da sich kein Antrieb beispielsweise zur Betätigung eines am Koppelement vorgesehenen Manipulators auf dem Koppelelement befindet.

Weitere erwähnenswerte Vorteile gegenüber dem Stand der Technik sind eine Verringerung des Eigengewichts der Vorrichtung am Koppelelement einhergehend mit einer vergrößerten, zum Umgang mit Artikeln zur Verfügung stehenden Nutzlast. Dies hat außerdem eine nochmalige Steigerung der erzielbaren Taktung zur Folge.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Figur 1: eine Vorrichtung zum Umgang mit Artikeln in einer perspektivischen Ansicht von oberhalb gesehen.
- Figur 2: eine Vorrichtung zum Umgang mit Artikeln mit einem in Form eines Greifers ausgeführten, an ihrem Koppelelement angeordneten Manipulator, in einer Seitenansicht.
- Figur 3: eine Vorrichtung zum Umgang mit Artikeln mit einem in Form eines Greifers ausgeführten, an ihrem in eine Extremlage ausgelenkten Koppelelement angeordneten Manipulator, in einer Seitenansicht.
- Figur 4: eine Vorrichtung zum Umgang mit Artikeln in einer teilweise geschnittenen Seitenansicht.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

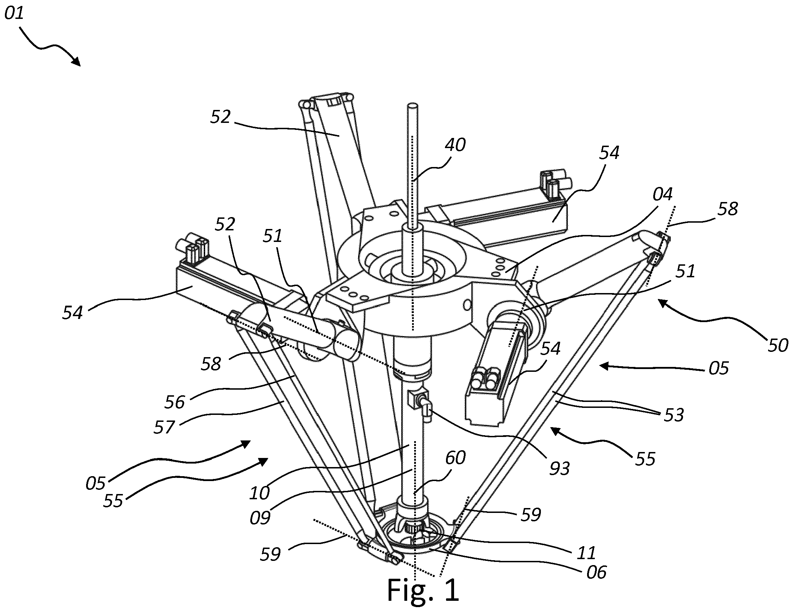

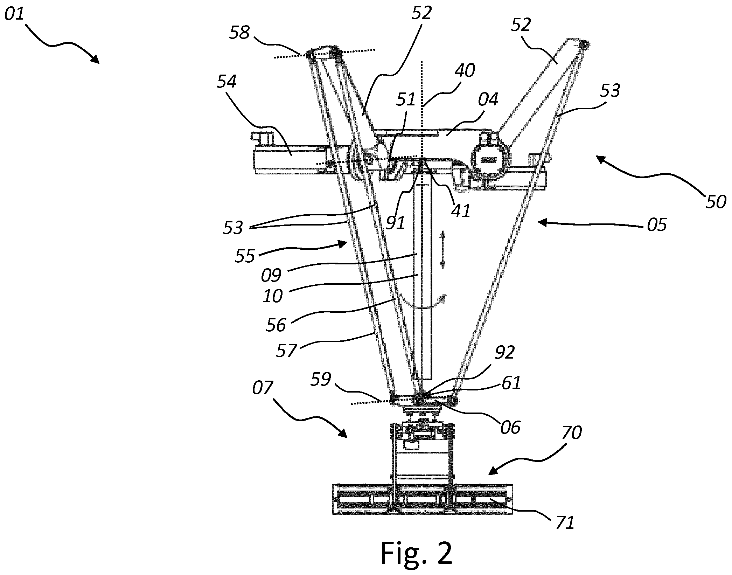

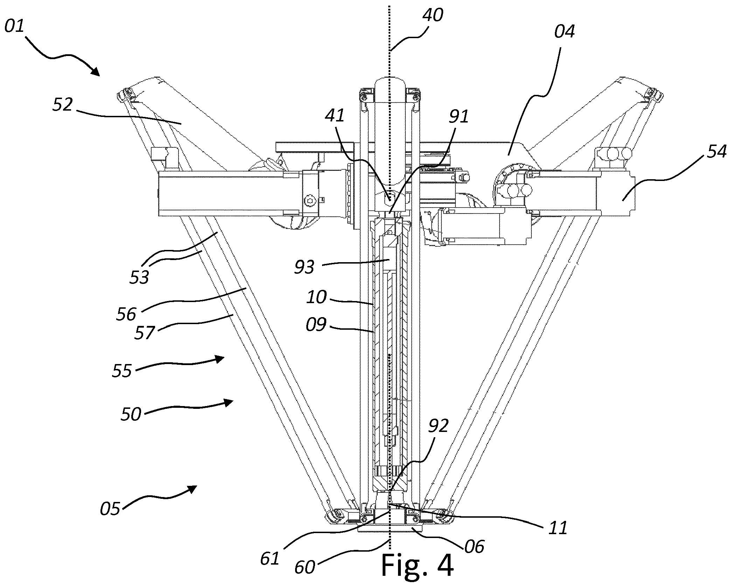

Eine in Figur 1 bis Figur 4 ganz oder in Teilen dargestellte Vorrichtung 01 zum Umgang mit Artikeln umfasst im Wesentlichen eine Basis 04 sowie ein Gestänge 05 bestehend aus mindestens drei angetriebenen Armen 50 und einem zentralen Koppelelement 06.

Die Basis 04 kann beispielsweise zur Anordnung an einem Gestell vorgesehen sein, welches Gestell vorzugsweise eine beispielsweise zentralen Partie oberhalb mindestens einer Fläche, auf der mit Artikeln umgegangen wird, umfasst. Bei einer Anordnung der Basis 04 an einer solchen zentralen Partie befindet sich die Basis 04 damit oberhalb der mindestens einen Fläche, auf der mit Artikeln umgegangen wird.

Jeder der angetriebenen Arme 50 besteht aus einem um eine eigene, vorzugsweise parallel zu der mindestens einen Fläche, auf der mit Artikeln umgegangen wird, verlaufende und an der Basis 04 angeordnete Schwenkachse 51 drehbar angetrieben gelagerten Oberarm 52 und einem an dem Oberarm 52 gelenkig angeordneten und mit dem Koppelement 06 gelenkig verbundenen Unterarm 53.

Ferner verfügt jeder der angetriebenen Arme 50 über einen eigenen Schwenkantrieb 54 zum individuellen Verschwenken des jeweiligen Oberarms 52 um dessen Schwenkachse 51. Jeder Schwenkantrieb 54 jeden Oberarms 52 ist dabei unabhängig von den Schwenkantrieben 54 der verbleibenden Oberarme 52 steuerbar.

Als Schwenkantriebe 54 für die Oberarme 52 kommen via der Schwenkachsen 51 auf die Oberarme 52 einwirkende Schwenkantriebe mit oder ohne Getriebe, beispielsweise getriebelose Direktantriebe, oder andersartige, beispielsweise über Zug- und/oder Druckstangen oder als Linearantriebe ausgeführte, auf die Oberarme 52 einwirkende, beispielsweise elektrische, pneumatische oder hydraulische Schwenkantriebe 54 in Frage.

Zwischen Basis 04 und dem Koppelelement 06 ist zumindest ein gesteuert angetriebener Linearaktuator 09 vorgesehen. Der Linearaktuator 09 ist mit einem ersten Ende 91 gelenkig an wenigstens einem Kopfpunkt 41 an der Basis 04 und mit einem zweiten Ende 92 gelenkig an zumindest einem Fußpunkt 61 am Koppelelement 06 angeordnet. Zwischen dem ersten Ende 91 und dem zweiten Ende 92 des Linearaktuators 09 erstreckt sich dessen Aktuatorachse 90. Ein die Erstreckung des Linearaktuators 09 entlang der Aktuatorachse 90 beeinflussender und damit verändernder Stellweg des Linearaktuators 09 ist proportional einem von der Stellung der Arme 50 vorgegebenen, veränderlichen Abstand zwischen Kopfpunkt 41 und Fußpunkt 61.

Ein entlang der Aktuatorachse 90 sich verändernder Stellweg des Linearaktuators gleicht damit den veränderlichen Abstand zwischen Kopfpunkt 41 und Fußpunkt 61 entsprechend der Stellung der Arme 50 aus.

Als ein Kopfpunkt 41 kann beispielsweise das Zentrum der Basis 41 und als ein Fußpunkt 61 das Zentrum des Koppelelements 06 dienen. Die Wahl der Zentren, vor allem die Wahl des Zentrums des Koppelelements 06 als Fußpunkt 61 hat dabei den Vorteil einer mittigen, zentralen Krafteinleitung durch den Linearaktuator 09 auf das Koppelelement 06.

Der Linearaktuator 09 hat eine gesteuert angetrieben verstellbare Erstreckung zwischen seinem ersten Ende 91 und seinem zweiten Ende 92 entlang der Aktuatorachse 90. Die gesteuert angetrieben verstellbare und damit veränderliche Erstreckung entspricht einer Grunderstreckung des Linearaktuators 09, in welcher der Linearaktuator 09 seine kleinste Erstreckung entlang der Aktuatorachse 90 aufweist, zuzüglich eines angetrieben veränderlichen Stellwegs. Der Stellweg kann dimensionslos dargestellt zwischen 0 und 1 betragen. Bei einem Stellweg von 0 ist der Linearaktuator 09 ganz zusammengefahren und die Erstreckung des Linearaktuators 09 entspricht dessen Grunderstreckung. Bei einem Stellweg von 1 ist der Linearaktuator 09 ganz auseinandergefahren. Die Erstreckung des Linearaktuators 09 entspricht hierbei der Grunderstreckung zuzüglich dem Stellweg. Dieser kann kleiner sein, als die Grunderstreckung, jedoch je nach Ausgestaltung des Linearaktuators 09 auch größer, bis zu einem mehrfachen der Grunderstreckung betragen.

Der Linearaktuator 09 ist dabei beispielsweise vermittels einer Steuerung so gesteuert, dass dessen Stellwegveränderung einem durch eine Änderung der Stellung der Arme 50 der Vorrichtung 01 vorgegebenen Abstandsänderung zwischen Kopfpunkt 41 und Fußpunkt 61 entspricht.

Der Linearaktuator 09 gleicht verschiedene Abstände zwischen Basis 04 und Koppelelement 06 aktiv aus und unterstützt dieses zumindest in ausgelenkter Position des Koppelelements 06, bei dem sich das Koppelelement 06 außerhalb eines durch die vertikale Projektion der Basis 04 und/oder einer durch die Schwenkachsen 51 eingeschlossenen Fläche entlang einer normal auf dieser aufstehenden Basisachse 40 ergebenden Zylinders befindet und den darüber hinaus gehenden Extremlagen.

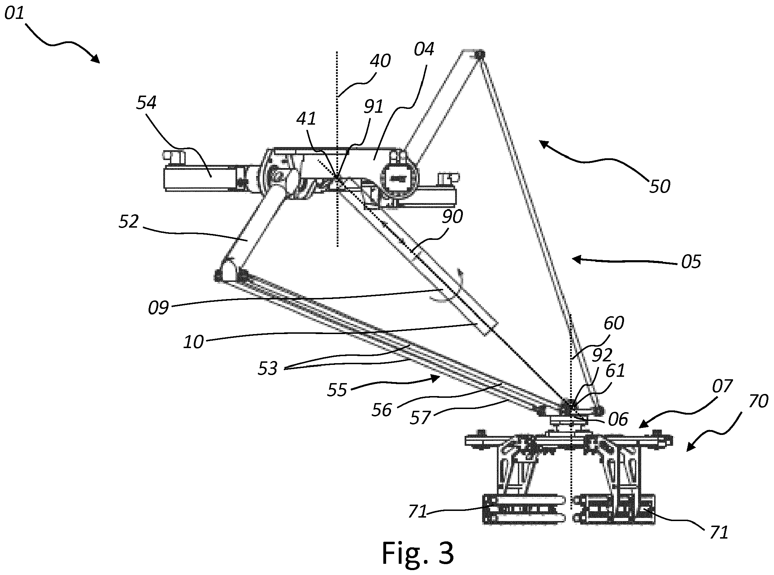

Eine Extremlage ist beispielhaft in Figur 3 dargestellt.

Die Basisachse 40 verläuft vorzugsweise orthogonal zu einer oder zu mehreren oder zu allen Schwenkachsen 51, an denen die Oberarme 52 der Arme 50 schwenkbar angetrieben gelagert sind. Die Basisachse 40 verläuft dabei orthogonal zu einer Schwenkachse 51, wenn das Skalarprodukt eines der Richtung einer Schwenkachse 51 entsprechenden Vektors und des der Richtung der Basisachse 40 entsprechenden Vektors gleich Null ist.

Bevorzugt liegen die Schwenkachsen 51, an denen die Oberarme 52 der Arme 50 schwenkbar angetrieben gelagert sind, innerhalb einer gemeinsamen Ebene. Verläuft die Basisachse 40 orthogonal zu den Schwenkachsen 51, so steht die Basisachse 40 normal auf der gemeinsamen Ebene auf.

Die Basisachse 40 kann beispielsweise vertikal auf der mindestens einen Fläche aufstehen, auf der mit Artikeln umgegangen wird. Wird auf oder zwischen mehreren Flächen mit Artikeln umgegangen, kann die Basisachse 40 zumindest hinsichtlich eines Abschnitts einer oder mehrerer dieser Flächen vertikal aufstehend ausgerichtet sein.

Der Linearaktuator 09 dient vorzugsweise lediglich einer Unterstützung der Arme 50. Dies wird vor allem in Extremlagen dadurch erreicht, dass der Linearaktuator 09 das Koppelelement 06 nach außen drückt, wodurch die Arme 50 und deren Schwenkantriebe 54 entlastet werden.

Der Linearaktuator 09 ist vorzugsweise eine entsprechend dem Stellweg entlang der Aktuatorachse 90 gesteuert angetrieben verlänger- und wieder verkürzbare Hub- und/oder Verstelleinrichtung, welche eine eingenommene Erstreckung entlang der Aktuatorachse 90 gegen in Richtung der Aktuatorachse 90 wirkende Druck- oder Druck- und Zugkräfte so lange hält, bis der Linearaktuator 09 durch dessen Betätigung bzw. eine Betätigung dessen Antriebs gesteuert angetrieben eine neue Erstreckung entlang der Aktuatorachse 90 einnimmt.

Der Linearaktuator 09 arbeitet demnach zumindest auf Druck, wobei er zu einer durch die Stellung der Arme 50 der Vorrichtung 01 vorgegebenen Länge ausfährt und diese auch gegen eine den Linearaktuator 09 zusammen stauchende Belastung hält.

Der Linearaktuator 09 kann hierfür als ein auch als Druckantrieb bezeichneter Hubantrieb ausgeführt sein.

Alternativ oder zusätzlich kann der Linearaktuator 09 als ein Zug- und Druckantrieb ausgeführt sein, wobei er auf Zug und auf Druck arbeitet und beispielsweise vermittels einer Steuerung gesteuert zu einer durch die Stellung der Arme 50 der Vorrichtung 01 vorgegebene Länge ausfährt und diese auch gegen eine den Linearaktuator 09 zusammen stauchende und/oder weiter verlängernde Belastung hält.

Zusammengefasst kann der Linearaktuator 09 demnach als ein Hub- oder als ein Hub- und Zugantrieb ausgeführt sein.

Bei dem einen Linearaktuator 09 oder bei einem oder mehreren Linearaktuatoren 09 von mehreren zwischen Basis 04 und Koppelelement 06 vorgesehenen Linearaktuatoren 09 kann es sich beispielsweise um:
- einen Pneumatikzylinder,
- einen Hydraulikzylinder,
- einen elektromechanischen Hubzylinder mit einem unmittelbar auf den Stellweg einwirkenden elektrischen Antrieb
- eine auch Teleskopsäule oder Teleskopantrieb genannte, elektromechanische Hubsäule mit einem unmittelbar auf den Stellweg einwirkenden elektrischen Antrieb handeln.

Als Antrieb für einen Linearaktuator 09 mit einem unmittelbar auf den Stellweg einwirkenden elektrischen Antrieb kommt beispielsweise ein Linearantrieb in Frage.

An zumindest einem Linearaktuator 09 der Vorrichtung 01 kann wenigstens ein Drehantrieb 93 vorgesehen sein, welcher eine Drehbewegung erzeugt und zum Koppelelement 06 überträgt.

Der Linearaktuator 09 kann mit dem Drehantrieb 93 zu einem Linear-Dreh-Aktuator 10 kombiniert sein. Der Drehantrieb 93 versetzt bei dessen Betätigung ein Ende 91, 92, vorzugsweise das von der Basis 04 weg gerichtete, zweite Ende 92 des Linearaktuators 09 in eine Drehung um die Aktuatorachse 90 gegenüber dem verbleibenden Ende 92, 91, vorzugsweise gegenüber dem der Basis 04 zugewandten ersten Ende 91. Das zweite Ende 92 des Linear-Dreh-Aktuators 10 ist dabei zusätzlich zur gelenkigen Verbindung des Linearaktuators 09 mit dem Koppelelement 06 um eine vorzugsweise normal auf einer durch das Koppelelement 06 gebildeten Ebene aufstehende Koppelelementachse 60 drehbar am Koppelelement 06 gelagert.

Der Drehantrieb 93 oder das zweite Ende 92 eines Linear-Dreh-Aktuators 10 ist vorzugsweise über mindestens ein Kreuz- oder Kardangelenk 11 gelenkig drehbar am Koppelelement 06 gelagert, wodurch wenigstens eine Drehbewegung vom Drehantrieb 93 am oder im Linearaktuator 09 zum Koppelelement 06 übertragen werden kann.

Als Drehantrieb 93 eines Linear-Dreh-Aktuators 10 kann ein in den Linearaktuator 09 integrierter Dreh-Torquemotor vorgesehen sein.

Am Koppelelement 06 kann ein Manipulator 07 vorgesehen sein. Dabei kann ein Manipulator 07 am Koppelelement 06 angeordnet sein, oder das Koppelelement 06 kann einen Manipulator 07 umfassen, oder das Koppelelement 06 kann von einem Manipulator 07 umfasst sein.

Der Manipulator 07 kann verdrehbar oder unverdrehbar am Koppelelement 06 angeordnet sein. Eine verdrehbare Anordnung des Manipulators 07 am Koppelelement 06 kann vorgesehen sein, um den Manipulator 07 beispielsweise gegenüber einem oder mehreren Artikeln und/oder gegenüber der mindestens einen Fläche, auf der mit Artikeln umgegangen wird, beispielsweise in seiner Drehlage um die Koppelelementachse 60 auszurichten.

Wenigstens eine vermittels zumindest eines Linear-Dreh-Aktuators 10 erzeugte und zum Koppelelement 06 übertragene Drehbewegung kann dazu dienen, einen am Koppelelement 06 vorgesehenen Manipulator 07 zu betätigen, beispielsweise damit dieser eine Aktion ausführen kann.

Die Vorrichtung 01 kann ferner mindestens eine von der Basis 04 zum Koppelelement 06 verlaufende, basisseitig angetriebene Teleskopwelle umfassen. Die Teleskopwelle kann Drehbewegungen übertragen, beispielsweise zur Betätigung eines am Koppelelement 06 vorgesehenen Manipulators 07.

Die Teleskopwelle ist mit einem basisseitigen Teleskopwellenantrieb kardanisch gelenkig verbunden. Die Teleskopwelle ist über mindestens ein Kreuz- oder Kardangelenk gelenkig drehbar am Koppelelement 06 gelagert.

Beispielsweise kann die Teleskopwelle mit einer drehbaren Lagerung und/oder einer Welle am Koppelelement 06 verbunden sein.

Die Teleskopwelle ist vorzugsweise als mittels Kreuz- oder Kardangelenken mit ihrem Teleskopwellenantrieb an der Basis 04 und mit der drehbaren Lagerung eines gegebenenfalls vorgesehenen Manipulators 07 am Koppelelement 06 verbundene Kardanwelle ausgeführt. Eine Teleskopwellenachse, entlang der sich die Teleskopwelle erstreckt, kann dadurch gegenüber der Basisachse 40 der Basis 04 und gegenüber der Koppelelementachse 60 jeweils einen veränderlichen Winkel einschließen. Darüber hinaus ist die Teleskopwelle als Teleskopstange ausgeführt, um verschiedene Abstände des Koppelelements 06 zur Basis 04 während dessen Bewegungen innerhalb eines Arbeitsraums ausgleichen zu können.

Der Arbeitsraum entspricht dabei einem von einer Hüllfläche eingeschlossenen Volumen, auf der alle Punkte liegen, welche eine beispielsweise einen Manipulator 07 umfassende Vorrichtung 01 zum Umgang mit Artikeln bei größtmöglicher Auslenkung ihrer Arme 50 in allen Raumwinkelbereichen maximal zu erreichen in der Lage ist.

Die Teleskopwelle kann zum Ausgleich verschiedener Abstände ineinander schiebbar oder beispielsweise an der Basis 04 in Richtung deren momentaner axialer Erstreckung gleitend gelagert sein.

Beispielsweise können eine vom Zentrum der Basis 04 zum Zentrum des Koppelelements 06 verlaufende Teleskopwelle und ein außermittig angeordneter Linearaktuator 09 oder eine vom Zentrum der Basis 04 zum Zentrum des Koppelelements 06 verlaufende Teleskopwelle und mehrere, beispielsweise zwischen beispielsweise symmetrisch um das Zentrum der Basis 04 angeordneten Kopfpunkten 41 und beispielsweise symmetrisch um das Zentrum des Koppelelements 06 angeordneten Fußpunkten 61 angeordnete Linearaktuatoren 09 vorgesehen sein.

Alternativ oder zusätzlich ist denkbar, eine oder mehrere Teleskopwellen außerhalb des Zentrums der Basis 04 und des Zentrums des Koppelelements 06 vorzusehen. Dabei kann vom Zentrum der Basis 04 zum Zentrum des Koppelelements 06 ein Linearaktuator 09 vorgesehen sein.

Einer oder mehrere Linearaktuatoren 09 können dabei zusätzlich mit einem Drehantrieb 93 ausgestattet sein.

Eine vermittels einer Drehbewegung zumindest eines Drehantriebs 93 und/oder eines Linear-Dreh-Aktuators 10 und/oder einer Teleskopwelle betätigte, von einem Manipulator 07 ausführbare Aktion ist dabei abhängig von der Bauweise des Manipulators 07.

Beispielsweise kann der Manipulator 07 als ein Greifer 70 ausgeführt sein oder einen Greifer 70 umfassen. Durch zum Koppelelement 06 übertragene, gegensinnige Drehbewegungen kann der Greifer 70 geschlossen und geöffnet werden, entsprechend einem Zupacken und einem Loslassen eines oder mehrerer Artikel. Zwischen Zupacken und Loslassen kann eine Verbringung erfolgen, bei der die gegriffenen Artikel beispielsweise angehoben und versetzt werden können. Der Greifer 70 besteht hierbei beispielsweise aus zwei gegeneinander beweglichen Klemm- oder Greifbacken 71 und einer Transformationseinrichtung, welche Drehbewegungen des Drehantriebs 93 und/oder des Linear-Dreh-Aktuators 10 und/oder der Teleskopwelle in Linearbewegungen der Klemm- oder Greifbacken 71 aufeinander zu oder voneinander weg umsetzt. Die Transformationseinrichtung kann beispielsweise durch ein Zugmittelgetriebe, beispielsweise einen Riementrieb verwirklicht sein. Als Zugmittel kommen dabei beispielsweise Zahnriemen oder zahnlose Riemen, wie etwa Flach- oder Rundriemen, Keilriemen, Keilrippenriemen, Ketten und dergleichen in Frage. Die Aufzählung erhebt hierbei keinen Anspruch auf Vollständigkeit. Durch eine Drehbewegung in einer ersten Richtung werden die Klemm- oder Greifbacken 71 beispielsweise aufeinander zu bewegt und damit der Greifer 70 geschlossen. Durch eine gegensinnige Drehbewegung in einer zweiten, der ersten Richtung entgegengesetzten Richtung werden die Klemm- oder Greifbacken 71 beispielsweise voneinander weg bewegt und damit der Greifer 70 geöffnet.

Da sich kein Antrieb auf dem Greifer 70 befindet, ist keine Versorgung mit Steuer- und Energieleitungen notwendig. Hierdurch wird ein Greifer 70 erhalten, der im Vergleich zum Stand der Technik ein geringes Eigengewicht aufweist und dadurch massenarm ausgeführt ist sowie eine höhere Taktung erlaubt.

Alternative Ausgestaltungen eines Manipulators 07 können beispielsweise einen als einen rotierenden Finger ausgeführten Manipulator 07 vorsehen, der vermittels einer oder mehrerer zum Koppelelement 06 übertragenen Drehbewegungen in Rotation versetzt wird, beispielsweise um Artikel beispielsweise durch Reibung auf einer Fläche, auf der mit Artikeln umgegangen wird, auszurichten und/oder zu verbringen.

Ebenfalls denkbar ist, einen Manipulator 07 zur Manipulation von beispielsweise als Behälter ausgeführten Artikeln, etwa durch Entfernen oder Aufbringen beispielsweise eines Schraubverschlusses auszuführen. Eine zur Manipulation benötigte Bewegung des Manipulators 07 wird hierbei vermittels wenigstens einer Drehbewegung erzeugt. Beispielsweise können vermittels eines Drehantriebs 93 und/oder eines Linear-Dreh-Aktuators 10 und/oder einer Teleskopwelle erzeugte und/oder zum Koppelelement 06 übertragene Drehbewegungen dazu dienen, beispielsweise Behälterdeckel - etwa im Recycling - auf- oder - beispielsweise bei der Abfüllung - zuzuschrauben.

Alternativ kann ein Manipulator 07 zur Behandlung von Artikeln beispielsweise durch Anbringung einer Umreifung um gruppierte Artikel vorgesehen und entsprechend ausgeführt sein. Dabei dienen eine oder mehrere zum Koppelelement 06 übertragene Drehbewegungen dazu, zur entsprechenden Behandlung notwendige Bewegungen und/oder Aktionen des Manipulators 07 auszuführen, beispielsweise ein Umreifungsband abzulängen und/oder dessen Enden nach dem Umwickeln der Artikel miteinander zu verbinden, beispielsweise durch bördeln.

Grundsätzlich können für verschiedene erforderliche Aktionen eine entsprechende Anzahl von jeweils Drehbewegungen erzeugende und/oder übertragende Drehantriebe 93 und/oder Linear-Dreh-Aktuatoren 10 und/oder Teleskopwellen vorgesehen sein.

Zwischen einer Eingangswelle eines am Koppelelement 06 vorgesehenen Manipulators 07, der vermittels einer oder mehrerer beispielsweise vermittels einer Teleskopwelle oder eines Linear-Dreh-Aktuators 10 und/oder eines Drehantriebs 93 erzeugte und zum Koppelelement 06 übertragene Drehbewegungen betätigt werden kann, und dem Drehantrieb 93 oder dem Linear-Dreh-Aktuator 10 oder der Teleskopwelle kann dabei ein beispielsweise platzsparendes, leichtes Getriebe, wie etwa ein Planeten- oder Zykloidgetriebe vorgesehen sein, welches schnelle Drehbewegungen beispielsweise eines Linear-Dreh-Aktuators 10 in langsamere, dafür drehmomentstärkere Bewegungen zur Betätigung des Manipulators 07 übersetzt.

Wenigstens einer der Unterarme 53 kann als ein Parallelgestänge 55 aus zwei Elle und Speiche bildenden, parallel verlaufenden Gestängeelementen 56, 57 ausgebildet sein. Die den Unterarm 53 bildenden Gestängeelemente 56, 57 des Parallelgestänges 55 sind hierbei bevorzugt in Richtung der Erstreckung der Schwenkachse 51 des zugehörigen Oberarms 52 des jeweiligen Arms 50 zueinander beabstandet angeordnet.

Die gelenkigen Verbindungen der beiden Gestängeelemente 56, 57 eines Unterarms 53 mit dem zugehörigen Oberarm 52 des jeweiligen Arms 50 liegen dabei auf einer ersten, parallel zur Schwenkachse 51 des Oberarms 52 des jeweiligen Arms 50 verlaufenden Geraden 58. Ebenso liegen hierbei die gelenkigen Verbindungen der beiden Gestängeelemente 56, 57 mit dem Koppelelement 06 auf einer zweiten, parallel zur Schwenkachse 51 des zugehörigen Oberarms 52 des jeweiligen Arms 50 verlaufenden Geraden 59. Eine Ausführung eines Unterarms 53 als ein solches Parallelgestänge 55 hält das Koppelelement 06 parallel zur Schwenkachse 51 des zugehörigen Oberarms 52 des jeweiligen Arms 50.

Bevorzugt sind mindestens zwei Unterarme 53 von Armen 50, deren Oberarme 52 nicht parallel zueinander verlaufende, sondern einander vorzugsweise schneidende oder windschief zueinander stehende Schwenkachsen 51 aufweisen, bzw. um nicht parallel zueinander verlaufende Schwenkachsen 51 angetrieben gelagert sind, als Parallelgestänge 55 ausgeführt. Dadurch kann das Koppelelement 06 in stets gleicher Ausrichtung relativ beispielsweise zur Basis 04 im Arbeitsraum geführt werden.

Besonders bevorzugt sind die Unterarme 53 aller Arme 50 als Parallelgestänge 55 ausgeführt. Dadurch wird eine besonders stabile Parallelführung des Koppelelements 06 beispielsweise zur Basis 04 erhalten.

Die Vorrichtung erlaubt die Durchführung eines Verfahrens, das vorsieht, bei einem Deltaroboter oder einem Tripoden zur Stützung zumindest in dessen Extremlagen wenigstens eine zusätzliche, zwischen mindestens einem Kopfpunkt 41 an der Basis 04 und mindestens einem Fußpunkt 61 am Koppelelement 06 wirkende Kraft aufzubringen, wobei die zwischen dem Kopfpunkt 41 an der Basis 04 und dem Fußpunkt 61 am Koppelelement 06 wirkende Kraft vorzugsweise zumindest eine Kopfpunkt 41 und Fußpunkt 61 beabstandende Druckkraft umfasst.

Die Erfindung ist insbesondere im Bereich der Herstellung und dem Betrieb von Vorrichtungen der Automatisierungstechnik gewerblich anwendbar, beispielsweise in der Automatisierungstechnik für die Lebensmittel- und Getränkeindustrie und/oder in der Verpackungstechnik und in der Verpackungsindustrie.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 04: Basis
- 05: Gestänge
- 06: Koppelelement
- 07: Manipulator
- 09: Linearaktuator
- 10: Linear-Dreh-Aktuator
- 11: Kreuz- oder Kardangelenk
- 40: Basisachse
- 41: Kopfpunkt
- 50: Arm
- 51: Schwenkachse
- 52: Oberarm
- 53: Unterarm
- 54: Schwenkantrieb
- 55: Parallelgestänge
- 56: Gestängeelement
- 57: Gestängeelement
- 58: Gerade
- 59: Gerade
- 60: Koppelelementachse
- 61: Fußpunkt
- 70: Greifer
- 71: Klemm- oder Greifbacken
- 90: Aktuatorachse
- 91: erstes Ende des Linearaktuators 09
- 92: zweites Ende des Linearaktuators 09
- 93: Drehantrieb

## Patentansprüche

1. Vorrichtung (01) zum Umgang mit Artikeln, umfassend:
- eine Basis (04) sowie
- ein Gestänge (05) bestehend aus mindestens drei angetriebenen Armen (50) und einem zentralen Koppelelement (06),
wobei jeder der angetriebenen Arme (50):
- aus einem um eine eigene, an der Basis (04) angeordnete Schwenkachse (51) drehbar angetrieben gelagerten Oberarm (52) und einem an dem Oberarm (52) gelenkig angeordneten und mit dem Koppelement (06) gelenkig verbundenen Unterarm (53) besteht, und
- über einen eigenen Schwenkantrieb (54) zum individuellen Verschwenken des Oberarms (52) um dessen Schwenkachse (51) verfügt,
wobei:
- zwischen der Basis (04) und dem Koppelelement (06) mindestens ein gesteuert angetriebener Linearaktuator (09) angeordnet ist, welcher mit einem ersten Ende (91) gelenkig an wenigstens einem Kopfpunkt (41) an der Basis (04) und mit einem zweiten Ende (92) gelenkig an zumindest einem Fußpunkt (61) am Koppelelement (06) angeordnet ist,
- sich zwischen dem ersten Ende (91) und dem zweiten Ende (92) des Linearaktuators (09) dessen Aktuatorachse (90) erstreckt und ein dessen Erstreckung entlang der Aktuatorachse (90) verändernder Stellweg des Linearaktuators (09) proportional einem von der Stellung der Arme (50) vorgegebenen, veränderlichen Abstand zwischen Kopfpunkt (41) und Fußpunkt (61) ist,
- ein Drehantrieb (93) an zumindest einem Linearaktuator (09) vorgesehen ist, welcher eine Drehbewegung erzeugt und zum Koppelelement (06) überträgt,
- der Linearaktuator (09) mit dem Drehantrieb (93) zu einem Linear-Dreh-Aktuator (10) kombiniert ist,
- der Drehantrieb (93) bei Betätigung das von der Basis (04) weg gerichtete, zweite Ende (92) des Linearaktuators (09) in eine Drehung um die Aktuatorachse (90) gegenüber dem der Basis (04) zugewandten ersten Ende (91) versetzt, und
- das zweite Ende (92) des Linear-Dreh-Aktuators (10) dabei zusätzlich zu der gelenkigen Verbindung mit dem Koppelelement (06) um eine Koppelelementachse (60) drehbar am Koppelelement (06) gelagert ist.

2. Vorrichtung nach Anspruch 1, wobei der Linearaktuator (09) eine gesteuert angetrieben verlänger- und wieder verkürzbare Hub- und/oder Verstelleinrichtung ist, welche eine eingenommene Erstreckung entlang der Aktuatorachse (90) gegen in Richtung der Aktuatorachse (90) wirkende Druck- oder Druck- und Zugkräfte so lange hält, bis der Linearaktuator (09) gesteuert angetrieben eine neue Erstreckung entlang der Aktuatorachse (90) einnimmt.

3. Vorrichtung nach Anspruch 1 oder 2, wobei wenigstens eine vermittels zumindest eines Linear-Dreh-Aktuators (10) erzeugte und zum Koppelelement (06) übertragene Drehbewegung einen am Koppelelement (06) vorgesehenen Manipulator (07) betätigt.

4. Vorrichtung nach einem der voranstehenden Ansprüche, wobei mindestens eine von der Basis (04) zum Koppelelement (06) verlaufende, basisseitig angetriebene Teleskopwelle vorgesehen ist, welche einen am Koppelelement (06) vorgesehenen Manipulator (07) betätigt.

5. Vorrichtung nach einem der voranstehenden Ansprüche, wobei als Kopfpunkt (41) das Zentrum der Basis (04) und als Fußpunkt (61) das Zentrum des Koppelelements (06) dient.

6. Vorrichtung nach einem der voranstehenden Ansprüche, wobei die Vorrichtung (01) eine Steuerung umfasst, welche den Linearaktuator (09) so steuert, dass dessen Stellwegveränderung einem durch eine Änderung der Stellung der Arme (50) der Vorrichtung (01) vorgegebenen Abstandsänderung zwischen Kopfpunkt (41) und Fußpunkt (61) entspricht.

7. Vorrichtung nach einem der Ansprüche 1 bis 6, wobei wenigstens einer der Unterarme (53) als ein Parallelgestänge (55) aus zwei parallel verlaufenden Gestängeelementen (56, 57) ausgebildet ist.

8. Vorrichtung nach Anspruch 7, wobei die das Parallelgestänge (55) bildenden Gestängeelemente (56, 57) des Unterarms (53) in Richtung der Erstreckung der Schwenkachse (51) des zugehörigen Oberarms (52) des jeweiligen Arms (50) zueinander beabstandet sind und die gelenkigen Verbindungen der beiden Gestängeelemente (56, 57) mit dem Oberarm (52) auf einer ersten, parallel zur Schwenkachse (51) des zugehörigen Oberarms (52) des jeweiligen Arms (50) verlaufenden Geraden (58) liegen, sowie die gelenkigen Verbindungen der beiden Gestängeelemente (56, 57) mit dem Koppelelement (06) auf einer zweiten, parallel zur Schwenkachse (51) des zugehörigen Oberarms (52) des jeweiligen Arms (50) verlaufenden Geraden (59) liegen.

9. Vorrichtung nach Anspruch 7 oder 8, wobei mindestens zwei Unterarme (53) von Armen (50), deren Oberarme (52) um nicht parallel zueinander verlaufende Schwenkachsen (51) angetrieben gelagert sind, als Parallelgestänge (55) ausgeführt sind.

10. Vorrichtung nach einem der voranstehenden Ansprüche, wobei am Koppelelement (06) ein Manipulator (07) vorgesehen ist oder das Koppelelement (06) einen Manipulator (07) umfasst oder das Koppelelement (06) von einem Manipulator (07) umfasst wird.

11. Vorrichtung nach Anspruch 10, wobei der Manipulator (07) verdrehbar oder unverdrehbar am Koppelelement (06) angeordnet ist.

## Claims

1. A device (01) for handling articles comprising
- a base (04), and
- a linkage assembly (05) consisting of at least three driven arms (50) and a central coupling element (06),
wherein each of the driven arms (50)
- consists of an upper arm (52) mounted rotatably driven about a pivot axis (51) of its own, which is attached to the base (04), and a forearm (53) mounted in an articulated manner to the upper arm (52) and connected in an articulated manner to the coupling element (06), and
- has its respective pivoting drive (54) for individually pivoting the upper arm (52) about its pivot axis (51),
wherein
- between the base (04) and the coupling element (06), at least one controlled driven linear actuator (09) is arranged, which is connected in an articulated manner with a first end (91) to at least one head point (41) on the base (04) and with a second end (92) linked in an articulated manner to at least one base point (61) on the coupling element (06),
- an actuator axis (90) of the linear actuator (09) extends between its first end (91) and its second end (92), and a travel of the linear actuator (09), which changes its extension along the actuator axis (90), is proportional to a variable distance between head point (41) and base point (61), which distance is determined by the position of the arms (50),
- a rotary drive (93) is provided on at least one linear actuator (09), which generates a rotational movement and transmits it to the coupling element (06),
- the linear actuator (09) is combined with the rotary drive (93) to form a linear rotary actuator (10),
- the rotary drive (93), when actuated, causes the second end (92) of the linear actuator (09), which faces away from the base (04), to rotate about the actuator axis (90) relative to the first end (91), which faces the base (04), and
- the second end (92) of the linear rotary actuator (10) is rotatably mounted to the coupling element (06) about a coupling element axis (60) in addition to being connected in an articulated manner to the coupling element (06).

2. The device as recited in claim 1 wherein the linear actuator (09) is a controlled driven, expandable and again contractible lifting and/or adjusting device that holds an assumed extension along the actuator axis (90) against pressure or pressure and tension forces acting in the direction of the actuator axis (90) until the linear actuator (09) is controlled driven to assume a new extension along the actuator axis (90).

3. The device as recited in claim 1 or 2 wherein at least one rotational movement generated by at least one linear rotary actuator (10) and transmitted to the coupling element (06) actuates a manipulator (07) provided on the coupling element (06).

4. The device as recited in one of the preceding claims wherein at least one telescopic shaft extending from the base (04) to the coupling element (06) and being driven from the base side is provided, which actuates a manipulator (07) provided on the coupling element (06).

5. The device as recited in one of the preceding claims wherein the center of the base (04) serves as head point (41) and the center of the coupling element (06) serves as base point (61).

6. The device as recited in one of the preceding claims wherein the device (01) comprises a controller that controls the linear actuator (09) in such a manner that its travel change corresponds to a change in distance between head point (41) and base point (61) defined by a change in the position of the arms (50) of the device (01).

7. The device as recited in one of the claims 1 to 6 wherein at least one of the forearms (53) is executed as a parallel linkage assembly (55) consisting of two linkage elements (56, 57) that run parallel to each other.

8. The device as recited in claim 7 wherein the linkage elements (56, 57) of the forearm (53) forming the parallel linkage assembly (55) are spaced at a distance from one another in the direction of the extension of the pivot axis (51) of the corresponding upper arm (52) of the respective arm (50), and the articulated connections of the two linkage elements (56, 57) with the upper arm (52) are positioned on a first straight line (58) running parallel to the pivot axis (51) of the corresponding upper arm (52) of the respective arm (50) and the articulated connections of the two linkage elements (56, 57) with the coupling element (06) are positioned on a second straight line (59) running parallel to the pivot axis (51) of the corresponding upper arm (52) of the respective arm (50).

9. The device as recited in claim 7 or 8 wherein at least two forearms (53) of arms (50) whose upper arms (52) are mounted driven about non-parallel pivot axes (51) are executed as a parallel linkage assembly (55).

10. The device as recited in one of the preceding claims wherein a manipulator (07) is provided on the coupling element (06) or the coupling element (06) comprises a manipulator (07) or the coupling element (06) is comprised by a manipulator (07).

11. The device as recited in claim 10 wherein the manipulator (07) is rotatably or non-rotatably mounted to the coupling element (06).

## Revendications

1. Dispositif (01) pour la manutention d'articles, comprenant :
- une base (04) ainsi que
- un train de barres (05) comprenant au moins trois bras entraînés (50) et une pièce d'accouplement centrale (06),
chacun des bras entraînés (50) :
- étant constitué d'un bras supérieur (52) monté entraîné en rotation autour d'un propre axe de pivotement (51) agencé sur la base (04), et d'un bras inférieur (53) agencé de manière articulée au bras supérieur (52) et relié par articulation à la pièce d'accouplement (06), et
- disposant d'un propre entraînement de pivotement (54) pour faire pivoter de manière individuelle le bras supérieur (52) autour de son axe de pivotement (51),
sachant que :
- est agencé entre la base (04) et la pièce d'accouplement (06) au moins un actionneur linéaire (09) entraîné par commande, lequel est agencé de manière articulée par une première extrémité (91) en au moins un point supérieur (41) à la base (04) et de manière articulée par une deuxième extrémité (92) en au moins un point inférieur (61) à la pièce d'accouplement (06),
- l'axe de l'actionneur (90) s'étendant entre la première extrémité (91) et la deuxième extrémité (92) de l'actionneur linéaire (09), une course de l'actionneur linéaire (09), qui fait varier l'étendue de celui-ci le long dudit axe d'actionneur (90), étant proportionnelle à la distance entre le point supérieur (41) et le point inférieur (61), prédéfinie par la position des bras (50) et variable,
- un entraînement rotatif (93) étant prévu au moins à un actionneur linéaire (09), lequel génère un mouvement de rotation et le transmet à la pièce d'accouplement (06),
- l'actionneur linéaire (09) étant combiné à un entraînement rotatif (93) pour former un actionneur linéaire-rotatif (10),
- l'entraînement rotatif (93) mettant, au moment où il est actionné, la deuxième extrémité (92) de l'actionneur linéaire (09), qui est dirigée dans le sens opposé à la base (04), en rotation autour de l'axe d'actionneur (90) par rapport à la première extrémité (91) dirigée vers la base (04), et
- la deuxième extrémité (92) de l'actionneur linéaire-rotatif (10) étant montée à cet égard, outre la liaison articulée à la pièce d'accouplement (06), de manière rotative à la pièce d'accouplement (06) autour d'un axe de pièce d'accouplement (60).

2. Dispositif selon la revendication 1, l'actionneur linéaire (09) étant un dispositif de réglage et/ou de levage que l'on peut allonger puis raccourcir à nouveau sur commande d'entraînement, qui garde une étendue prise le long de l'axe d'actionneur (90) contre des efforts de compression ou des efforts de compression et de traction s'exerçant dans le sens de l'axe d'actionneur (90), et ce jusqu'à ce que l'actionneur linéaire (09) prenne, sur commande d'entraînement, une nouvelle étendue le long de l'axe d'actionneur (90).

3. Dispositif selon la revendication 1 ou 2, au moins un mouvement de rotation généré par le biais d'au moins un actionneur linéaire-rotatif (10) et transmis à la pièce d'accouplement (06) actionnant un manipulateur (07) prévu sur la pièce d'accouplement (06).

4. Dispositif selon l'une quelconque des revendications précédentes, étant prévu au moins un arbre télescopique courant de la base (04) à la pièce d'accouplement (06) et entraîné au niveau de la base, lequel arbre actionne un manipulateur (07) prévu sur la pièce d'accouplement (06).

5. Dispositif selon l'une quelconque des revendications précédentes, le centre de la base (04) servant de point supérieur (41) et le centre de la pièce d'accouplement (06) servant de point inférieur (61).

6. Dispositif selon l'une quelconque des revendications précédentes, le dispositif (01) comprenant une commande qui commande l'actionneur linéaire (09) de telle sorte que son changement de course correspond à un changement de distance, prédéfini par un changement de la position des bras (50) du dispositif (01), entre le point supérieur (41) et le point inférieur (61).

7. Dispositif selon l'une des revendications 1 à 6, au moins un des bras inférieurs (53) étant formé en tant que train de barres parallèles (55) constitué de deux pièces de train de barre (56, 57) de direction parallèle.

8. Dispositif selon la revendication 7, les pièces de train de barre (56, 57) du bras inférieur (53), qui forment le train de barres parallèles (55), étant espacées les unes des autres dans le sens de l'étendue de l'axe de pivotement (51) du bras supérieur (52) correspondant du bras respectif (50), et les liaisons articulées des deux pièces de train de barres (56, 57) avec le bras supérieur (52) reposant sur un premier alignement droit (58) courant parallèlement à l'axe de pivotement (51) du bras supérieur (52) correspondant du bras respectif (50), ainsi que les liaisons articulées des deux pièces de train de barres (56, 57) avec la pièce d'accouplement (06) reposant sur un deuxième alignement droit (59) courant parallèlement à l'axe de pivotement (51) du bras supérieur (52) correspondant du bras respectif (50).

9. Dispositif selon la revendication 7 ou 8, au moins deux bras inférieurs (53) de bras (50), dont les bras supérieurs (52) sont montés entraînés autour d'axes de pivotement (51) non parallèles les uns par rapport aux autres, étant réalisés sous la forme de train de barres parallèles (55).

10. Dispositif selon l'une quelconque des revendications précédentes, étant prévu un manipulateur (07) sur la pièce d'accouplement (06), ou la pièce d'accouplement (06) comprenant un manipulateur (07), ou la pièce d'accouplement (06) étant comprise dans un manipulateur (07).

11. Dispositif selon la revendication 10, le manipulateur (07) étant agencé de manière rotative ou non rotative sur la pièce d'accouplement (06).
